# EUROPEAN PATENT APPLICATION

(11) **EP 2 811 750 A1**
(43) Date of publication of application: **10.12.2014**
(21) Application number: 13755207.1
(22) Date of filing: 28.02.2013
(51) Int. Cl.: H04N 21/436, H04N 21/40, H04N 21/472

(54) **SET TOP BOX INTERACTION METHOD AND ASSOCIATED SET TOP BOX AND SYSTEM**

(30) Priority: 01.03.2012 CN 201210051311
(71) Applicant: Huawei Device Co., Ltd., Shenzhen, Guangdong 518129 (CN)
(72) Inventor: QIN, Xiaoqing, Shenzhen Guangdong 518129 (CN); LIN, Yanfu, Shenzhen Guangdong 518129 (CN); WANG, Fei, Shenzhen Guangdong 518129 (CN)
(74) Representative: Pfenning, Meinig & Partner GbR
(86) International application number: PCT/CN2013/071973
(87) International publication number: WO 2013/127346

(57) **Abstract**

Embodiments of the present invention disclose a set top box interaction method and a related set top box and system, which are used for conducting a social network activity with equal social status between remote set top box users. The method in the embodiments of the present invention includes: sending, by a first set top box, interaction information to a second set top box, so that the second set top box displays interaction content; and receiving, by the first set top box, interaction result information that is sent by the second set top box according to the interaction content. The invention solutions in the embodiments ensure equal social status between users in an interaction process, thereby improving set top box-based social interaction experience of the users and satisfying social needs of the users.

## Description

This application claims priority to Chinese Patent Application No. 201210051311.1, filed with the Chinese Patent Office on March 1, 2012 and entitled "SET TOP BOX INTERACTION METHOD AND RELATED SET TOP BOX AND SYSTEM", which is incorporated herein by reference in its entirety.

### TECHNICAL FIELD

The present invention relates to the field of digital television technologies, and in particular, to a set top box interaction method and a related set top box and system.

### BACKGROUND

A set top box (Set Top Box, STB) is a device connecting a television set with an external signal source. The set top box can convert a compressed digital signal into play content of a television program so that a corresponding television program can be played on the television set. The digital signal may come from a cable, a satellite antenna, a broadband network, or terrestrial broadcasting. In addition to receiving images and sounds in the television program, the set top box can receive data content, such as a television program guide, an Internet web page, data broadcasting, and a software upgrade. A bi-directional set top box refers to a set top box supporting a bi-directional network interconnection. Generally, a service function of the bi-directional set top box cooperates with a head-end system of video on demand (Video On Demand, VOD) to provide a video on demand service for a user, that is, the user can make a video request by using the bi-directional set top box. If the bi-directional set top box is interconnected to other service systems by using a network, functions, such as browsing web pages, playing online games, receiving and sending emails, performing network downloads, and making video calls can also be implemented. In addition, by using a Digital Living Network Alliance (Digital Living Network Alliance, DLNA) technology, the bi-directional set top box can further support a home interconnection function, thereby implementing multi-media sharing with other devices inside a home network.

Currently, the bi-directional set top box can provide an interaction function for remote users. For example, a user of set top box A initiatively sends a multi-media access request to set top box B, and set top box B responds to the access request and delivers a multi-media code stream to set top box A; or a user of set top box A pushes a television program to a user of set top box B compulsorily, and set top box B interrupts a current service and plays the pushed television program.

However, in the foregoing interaction method, the two interacting parties are unequal in social status: Only one party initiatively makes an access request or is forced to play a pushed program, and therefore there is a lack of an interaction operation between the two interacting parties, thereby failing to satisfy users' social needs of equal social status.

### SUMMARY

In order to solve the foregoing problems, the present invention provides a set top box interaction method and a related set top box and system, which are used for conducting a social network activity with equal social status between remote set top box users. The method in the present invention ensures equal social status between users in an interaction process, thereby improving set top box-based social interaction experience of the users and satisfying social needs of the users.

A set top box interaction method includes:
sending, by a first set top box, interaction information to a second set top box, so that the second set top box displays interaction content; and
receiving, by the first set top box, interaction result information that is sent by the second set top box according to the interaction content.

A set top box interaction method includes:
receiving, by a second set top box, interaction information sent by a first set top box;
displaying, by the second set top box, interaction content according to the interaction information; and
sending, by the second set top box, interaction result information to the first set top box according to the interaction content.

A set top box includes:
an interaction information sending module, configured to send interaction information to a second set top box, so that the second set top box displays interaction content; and
an interaction result information receiving module, configured to receive interaction result information that is sent by the second set top box according to the interaction content.

A set top box includes:
an interaction information receiving module, configured to receive interaction information sent by a first set top box;
an interaction content displaying module, configured to display interaction content according to the interaction information; and
an interaction result information sending module, configured to send interaction result information to the first set top box according to the interaction content.

A set top box interaction system includes:
the two set top boxes described above, where these two are connected to each other in a communicationable manner.

From the foregoing technical solutions, it can be learnt that embodiments of the present invention have the following advantages:

A first set top box sends interaction information to a second set top box, so that the second set top box displays interaction content; a user chooses and determines interaction result information according to the interaction content and instructs the second set top box to feed back the interaction result information; and the first set top box receives the interaction result information sent by the second set top box, thereby implementing that remote set top box users conduct a social network activity with equal social status. The method in the present invention ensures equal social status between users in an interaction process, thereby improving set top box-based social interaction experience of the users and satisfying social needs of the users.

### BRIEF DESCRIPTION OF DRAWINGS

FIG. 1 is a flowchart of a set top box interaction method according to a first embodiment of the present invention;
FIG. 2 is a flowchart of a set top box interaction method according to a second embodiment of the present invention;
FIG. 3 is a schematic diagram of interaction content displaying according to an embodiment of the present invention;
FIG. 4 is a flowchart of a set top box interaction method according to a third embodiment of the present invention;
FIG. 5 is a flowchart of a set top box interaction method according to a fourth embodiment of the present invention;
FIG. 6 is a structural diagram of a set top box according to a fifth embodiment of the present invention;
FIG. 7 is a structural diagram of a set top box according to a sixth embodiment of the present invention;
FIG. 8 is a structural diagram of a set top box according to a seventh embodiment of the present invention;
FIG. 9 is a structural diagram of a set top box according to an eighth embodiment of the present invention;
FIG. 10 is a signaling diagram of a set top box interaction system according to a ninth embodiment of the present invention; and
FIG. 11 is a signaling diagram of a set top box interaction system according to a tenth embodiment of the present invention.

### DESCRIPTION OF EMBODIMENTS

Embodiments of the present invention provide a set top box interaction method, which is used for conducting a social network activity with equal social status between remote set top box users. The method in the present invention ensures equal social status between users in an interaction process, thereby improving set top box-based social interaction experience of the users and satisfying social needs of the users. In addition, the embodiments of the present invention further provide a set top box related to the method. The following separately describes them in detail.

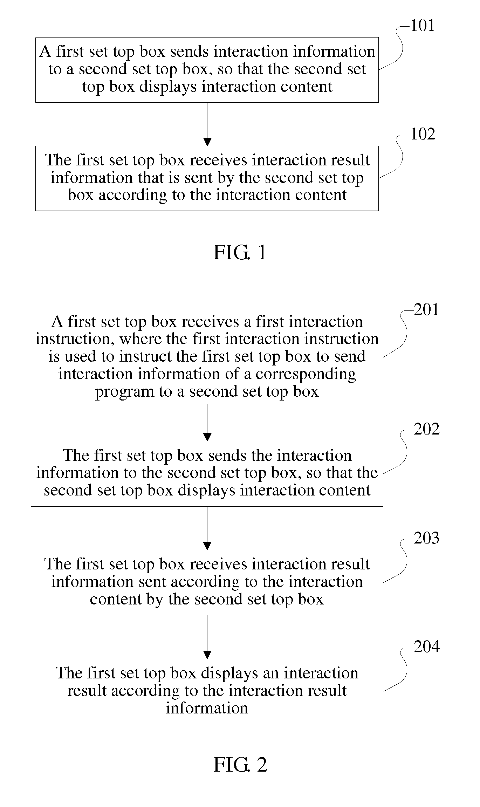

A first embodiment of the present invention provides a detailed description of a set top box interaction method. For a specific process of the set top box interaction method, refer to FIG. 1, the method includes the following steps:
101. A first set top box sends interaction information to a second set top box, so that the second set top box displays interaction content.

In this embodiment, in an application scenario in which remote set top box users conduct a social network activity with equal social status, when a user of the first set top box hopes, in a process of watching a television program, to recommend a program that is currently being watched to a remote friend for enjoying, the user of the first set top box instructs the first set top box to send the interaction information to the second set top box, so that the second set top box displays the interaction content.

The interaction information is a basis for the second set top box to display the interaction content. After receiving the interaction information sent by the first set top box, the second set top box performs a parsing operation and then displays, by using a television set, the interaction content obtained through parsing to a current user; and the current user may reply to the social activity of a current program recommendation according to the interaction content.
102. The first set top box receives interaction result information that is sent by the second set top box according to the interaction content.

In step 101, after a user of the second set top box replies to the social activity of the current program recommendation according to the interaction content, the second set top box sends the interaction result information to the first set top box according to the interaction content, that is, the interaction result information is determined by the user of the second set top box according to the interaction content.

Then, the first set top box receives the interaction result information sent by the second set top box. After step 101 and step 102 are performed, the user of the first set top box and the user of the second set top box complete a social network activity with equal social status based on set top boxes.

Preferably, the first set top box may further conduct the foregoing social activity with a plurality of set top boxes in addition to the second set top box at the same time, that is, a social network activity among a plurality of users with equal social status is implemented. The second set top box described in this embodiment is merely an example and constitutes no specific limitation on the number of interaction objects in this scenario.

In this embodiment, a first set top box sends interaction information to a second set top box, so that the second set top box displays interaction content; a user chooses and determines interaction result information according to the interaction content and instructs the second set top box to feed back the interaction result information; and the first set top box receives the interaction result information sent by the second set top box, thereby implementing that remote set top box users conduct a social network activity with equal social status. The method in the present invention ensures equal social status between users in an interaction process, thereby improving set top box-based social interaction experience of the users and satisfying social needs of the users.

A second embodiment of the present invention provides a supplementary description of the set top box interaction method described in the first embodiment. For a specific process of the set top box interaction method in this embodiment, refer to FIG. 2. The method includes the following steps:
201. A first set top box receives a first interaction instruction, where the first interaction instruction is used to instruct the first set top box to send interaction information of a corresponding program to a second set top box.

In this embodiment, in an application scenario in which remote set top box users conduct a social network activity with equal social status, when a user of the first set top box hopes, in a process of watching a television program, to recommend a program that is currently being watched to a remote friend for enjoying, the user of the first set top box sends the first interaction instruction to the first set top box.

The first interaction instruction is used to instruct the first set top box to send the interaction information of the corresponding program to the second set top box.

Then, the first set top box receives the first interaction instruction.

Preferably, a manner in which the user sends the first interaction instruction may be pressing a share button on a remote controller or on the set top box when a current program is playing, choosing one or more remote friends with whom the user hopes to interact, and sending the first interaction instruction. The foregoing is merely an example of the manner in which the user sends the first interaction instruction, and constitutes no specific limitation.
202. The first set top box sends the interaction information to the second set top box, so that the second set top box displays interaction content.

After receiving the first interaction instruction, the first set top box sends the interaction information to the second set top box according to an instruction of the first interaction instruction, so that the second set top box displays the interaction content. When displaying the interaction content, the second set top box sends prompt information to a user, for example, flickering an interface or playing a prompt tone.

Each set top box has a unique identity (Identity, ID), used for addressing communications. Preferably, the first set top box may query a communication address of the second set top box by using an ID of the second set top box, so as to contact the second set top box. In addition, the first set top box may further save the communication address of the second set top box in advance. The foregoing is merely an example of the manner in which the first set top box contacts the second set top box, and constitutes no specific limitation.

The interaction information is a basis for the second set top box to display the interaction content. Preferably, the interaction information may be recorded in a form of a uniform resource locator (Uniform Resource Locator, URL). The interaction information includes information such as a program type, a program number, and a program name, which is not specifically limited herein. After receiving the interaction information sent by the first set top box, the second set top box performs a parsing operation and displays, by using a television set, the interaction content obtained through parsing to a current user; and the current user may reply to the social activity of a current program recommendation according to the interaction content.

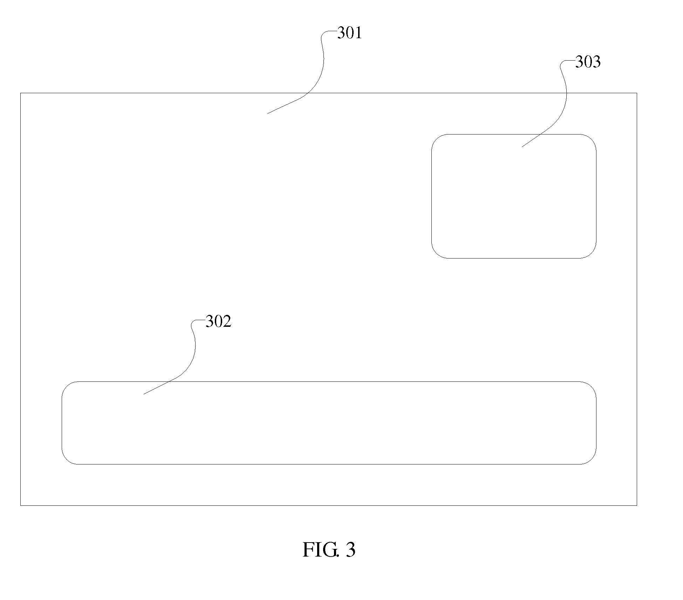

Preferably, the interaction content may be displayed in an interaction dialog box or a Picture in Picture (Picture In Picture, PIP) preview box, or may be displayed in the two. Referring to FIG. 3, when a user of the second set top box is watching a program on a current program interface 301, the second set top box receives the interaction information, parses streaming media, and then displays the interaction content to the current user by using the television set. The interaction content is displayed in at least one of an interaction dialog box 302 or a PIP preview box 303, or may be displayed in one or more other interaction content boxes. Details are not repeatedly described herein.

The PIP preview box 303 is used to provide a program preview for the user of the second set top box. In order to use a PIP technology, the set top box needs to be equipped with a dual decoder.

In addition, corresponding to the interaction information, the interaction dialog box 302 includes information such as the program type, the program number, and the program name, which is not specifically limited herein. To enable the user of the second set top box to reply to the social activity of the current program recommendation according to the interaction content, the interaction dialog box 302 at least includes an Accept button and a Refuse button, which are used to generate interaction result information. When the Accept button is pressed, it indicates that the user of the second set top box agrees to watch the program recommended by the user of the first set top box; and the user of the second set top box switches to the program recommended by the user of the first set top box and plays the program in a full screen mode, and eliminates the interaction content at the same time. When the Refuse button is pressed, it indicates that the user of the second set top box refuses to watch the program recommended by the user of the first set top box; and the user of the second set top box keeps playing a current program and eliminates the interaction content at the same time. When no button is pressed within a preset period of time, an effect is the same as an effect when the Refuse button is pressed. This is merely an example of an interaction manner, which is not specifically limited.
203. The first set top box receives interaction result information sent according to the interaction content by the second set top box.

The interaction result information is determined by the user of the second set top box according to the interaction content. The user of the second set top box determines an interaction result according to the interaction content, for example, accepting playing or refusing to play the recommended program, and then the interaction result information is generated. By using a method similar to the method for sending the first interaction instruction by the user of the first set top box, the user of the second set top box sends a second interaction instruction to the second set top box, where the second interaction instruction is used to instruct the second set top box to send the interaction result information to the first set top box.

Afterwards, the second set top box sends the interaction result information to the first set top box, and the first set top box receives the interaction result information sent by the second set top box.
204. The first set top box displays an interaction result according to the interaction result information.

After receiving the interaction result information sent by the second set top box, the first set top box displays the interaction result according to the interaction result information, so that the user of the first set top box learns a result of the current interaction. For example, if the user of the second set top box accepts playing or refuses to play the recommended program, a display manner similar to the manner in which the interaction content is displayed is adopted. Details are not repeatedly described herein.

Preferably, the first set top box may further conduct the foregoing social activity with a plurality of set top boxes in addition to the second set top box at the same time, that is, a social network activity among a plurality of users with equal social status is implemented. The second set top box described in this embodiment is merely an example and constitutes no specific limitation on the number of interaction objects in this scenario.

In this embodiment, a user of a first set top box sends interaction information to a second set top box by using the first set top box, so that the second set top box displays interaction content to a user of the second set top box; the user of the second set top box chooses and determines interaction result information according to the interaction content and instructs the second set top box to feed back the interaction result information; and after receiving the interaction result information sent by the second set top box, the first set top box displays an interaction result to the user of the first set top box, thereby implementing that remote set top box users conduct a social network activity with equal social status. The method in the present invention ensures equal social status between users in an interaction process, thereby improving set top box-based social interaction experience of the users and satisfying social needs of the users.

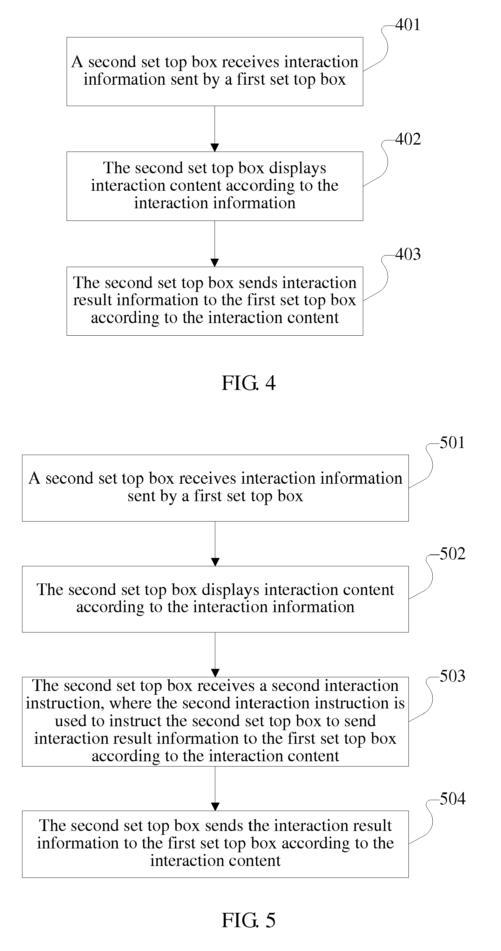

A third embodiment of the present invention provides a detailed description of another set top box interaction method. For a specific process of the set top box interaction method in this embodiment, refer to FIG. 4. The method includes the following steps:
401. A second set top box receives interaction information sent by a first set top box.

In this embodiment, in an application scenario in which remote set top box users conduct a social network activity with equal social status, when a user of the first set top box hopes, in a process of watching a television program, to recommend a program that is currently being watched to a remote friend for enjoying, the user of the first set top box instructs the first set top box to send the interaction information to the second set top box.

The second set top box receives the interaction information sent by the first set top box.
402. The second set top box displays interaction content according to the interaction information.

After receiving the interaction information sent by the first set top box, the second set top box displays the interaction content according to the interaction information.

The interaction information is a basis for the second set top box to display the interaction content. After receiving the interaction information sent by the first set top box, the second set top box performs a parsing operation and then displays, by using a television set, the interaction content obtained through parsing to a current user; and the current user may reply to the social activity of a current program recommendation according to the interaction content.
403. The second set top box sends interaction result information to the first set top box according to the interaction content.

After a user of the second set top box replies to the social activity of the current program recommendation according to the interaction content, the second set top box sends the interaction result information to the first set top box according to the interaction content, that is, the interaction result information is determined by the user of the second set top box according to the interaction content.

Preferably, the second set top box may further conduct the foregoing social activity with a plurality of set top boxes in addition to the first set top box at the same time, that is, a social network activity among a plurality of users with equal social status is implemented. The first set top box described in this embodiment is merely an example and constitutes no specific limitation on the number of interaction objects in this scenario.

In this embodiment, by receiving interaction information sent by a first set top box, a second set top box displays interaction content; a user of the second set top box chooses and determines interaction result information according to the interaction content and instructs the second set top box to feed back the interaction result information, thereby implementing that remote set top box users conduct a social network activity with equal social status. The method in the present invention ensures equal social status between users in an interaction process, thereby improving set top box-based social interaction experience of the users and satisfying social needs of the users.

The third embodiment of the present invention provides a supplementary description of the set top box interaction method in the second embodiment. For a specific process of the set top box interaction method in this embodiment, refer to FIG. 5. The method includes the following steps:
501. A second set top box receives interaction information sent by a first set top box.

In this embodiment, in an application scenario in which remote set top box users conduct a social network activity with equal social status, when a user of the first set top box hopes, in a process of watching a television program, to recommend a program that is currently being watched to a remote friend for enjoying, the user of the first set top box sends a first interaction instruction to the first set top box.

The first interaction instruction is used to instruct the first set top box to send interaction information of a corresponding program to the second set top box. The second set top box receives the interaction information sent by the first set top box.
502. The second set top box displays interaction content according to the interaction information.

The interaction information is a basis for the second set top box to display the interaction content. When displaying the interaction content, the second set top box sends prompt information to a user, for example, flickering an interface or playing a prompt tone.

The second set top box displays the interaction content according to the interaction information. Specifically, after receiving the interaction information sent by the first set top box, the second set top box performs a parsing operation and then displays, by using a television set, the interaction content obtained through parsing to a current user; and the current user may reply to the social activity of a current program recommendation according to the interaction content.

For an example of the interaction content, refer to related records in the second embodiment of the present invention.
503. The second set top box receives a second interaction instruction, where the second interaction instruction is used to instruct the second set top box to send interaction result information to the first set top box according to the interaction content.

The second set top box receives the second interaction instruction, where the second interaction instruction is used to instruct the second set top box to send the interaction result information to the first set top box according to the interaction content, that is, the interaction result information is determined by a user of the second set top box according to the interaction content.

The user of the second set top box determines an interaction result according to the interaction content, for example, accepting playing or refusing to play a recommended program, and then the interaction result information is generated. Referring to a record of the first interaction instruction in the second embodiment of the present invention, the user of the second set top box sends the second interaction instruction to the second set top box by using a method similar to the method for sending the first interaction instruction by the user of the first set top box.
504. The second set top box sends the interaction result information to the first set top box according to the interaction content.

The second set top box sends the interaction result information to the first set top box, and the first set top box receives the interaction result information sent by the second set top box. After receiving the interaction result information sent by the second set top box, the first set top box displays the interaction result according to the interaction result information. For example, if the user of the second set top box accepts playing or refuses to play a recommended program, a display manner similar to the manner in which the interaction content is displayed is adopted. Details are not repeatedly described herein.

Preferably, the second set top box may further conduct the foregoing social activity with a plurality of set top boxes in addition to the first set top box at the same time, that is, a social network activity among a plurality of users with equal social status is implemented. The first set top box described in this embodiment is merely an example and constitutes no specific limitation on the number of interaction objects in this scenario.

In this embodiment, a user of a first set top box sends interaction information to a second set top box by using the first set top box, so that the second set top box displays interaction content to a user of the second set top box; the user of the second set top box chooses and determines interaction result information according to the interaction content and instructs the second set top box to feed back the interaction result information; and after receiving the interaction result information sent by the second set top box, the first set top box displays the interaction result to the user of the first set top box, thereby implementing that remote set top box users conduct a social network activity with equal social status. The method in the present invention ensures equal social status between users in an interaction process, thereby improving set top box-based social interaction experience of the users and satisfying social needs of the users.

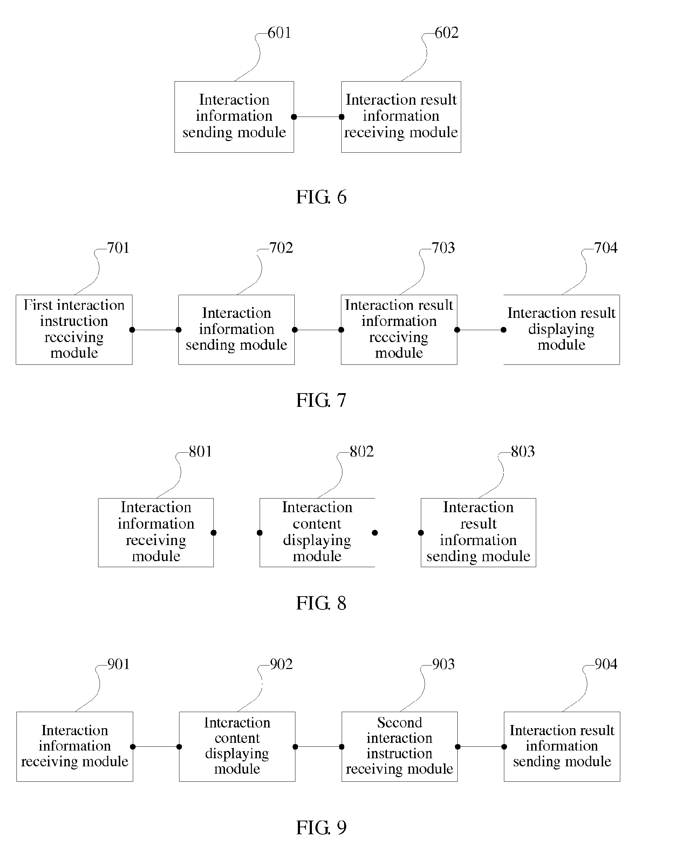

A fifth embodiment of the present invention provides a detailed description of a set top box. In addition, this apparatus embodiment is corresponding to the method embodiment in the first embodiment. Details of some related conventional technologies are not repeatedly described herein. For a specific structure of the set top box in this embodiment, refer to FIG. 6. The set top box includes:

The interaction information sending module 601 is configured to send interaction information to a second set top box, so that the second set top box displays interaction content.

In this embodiment, in an application scenario in which remote set top box users conduct a social network activity with equal social status, when a user of a first set top box hopes, in a process of watching a television program, to recommend a program that is currently being watched to a remote friend for enjoying, the user of the first set top box instructs the interaction information sending module 601 to send the interaction information to the second set top box, so that the second set top box displays the interaction content.

The interaction information is a basis for the second set top box to display the interaction content. After receiving the interaction information sent by the first set top box, the second set top box performs a parsing operation and then displays, by using a television set, the interaction content obtained through parsing to a current user; and the current user may reply to the social activity of a current program recommendation according to the interaction content.

The interaction result information receiving module 602 is configured to receive interaction result information that is sent by the second set top box according to the interaction content.

After a user of the second set top box replies to the social activity of the current program recommendation according to the interaction content, the second set top box sends the interaction result information to the first set top box according to the interaction content, that is, the interaction result information is determined by the user of the second set top box according to the interaction content.

Then, the interaction result information receiving module 602 receives the interaction result information sent by the second set top box.

Preferably, the first set top box may further conduct the foregoing social activity with a plurality of set top boxes in addition to the second set top box at the same time, that is, a social network activity among a plurality of users with equal social status is implemented. The second set top box described in this embodiment is merely an example and constitutes no specific limitation on the number of interaction objects in this scenario.

In this embodiment, an interaction information sending module 601 of a first set top box sends interaction information to a second set top box, so that the second set top box displays interaction content; a user chooses and determines interaction result information according to the interaction content and instructs the second set top box to feed back the interaction result information; and the interaction result information receiving module 602 of the first set top box receives the interaction result information sent by the second set top box, thereby implementing that remote set top box users conduct a social network activity with equal social status. The method in the present invention ensures equal social status between users in an interaction process, thereby improving set top box-based social interaction experience of the users and satisfying social needs of the users.

A sixth embodiment of the present invention provides a supplementary description of the set top box in the fifth embodiment. In addition, this apparatus embodiment is corresponding to the method embodiment in the second embodiment. Details of some related conventional technologies are not repeatedly described herein. For a specific structure of the set top box in this embodiment, refer to FIG. 7. The set top box includes: a first interaction instruction receiving module 701, an interaction information sending module 702, an interaction result information receiving module 703, and an interaction result displaying module 704.

The first interaction instruction receiving module 701 is configured to receive a first interaction instruction, where the first interaction instruction is used to instruct the first set top box to send interaction information of a corresponding program to a second set top box.

In this embodiment, in an application scenario in which remote set top box users conduct a social network activity with equal social status, when a user of the first set top box hopes, in a process of watching a television program, to recommend a program that is currently being watched to a remote friend for enjoying, the user of the first set top box sends the first interaction instruction to the first set top box.

The first interaction instruction is used to instruct the first set top box to send the interaction information of the corresponding program to the second set top box.

Then, the first interaction instruction receiving module 701 receives the first interaction instruction.

The interaction information sending module 702 is configured to send the interaction information to the second set top box, so that the second set top box displays interaction content.

After the first interaction instruction receiving module 701 receives the first interaction instruction, the interaction information sending module 702 sends the interaction information to the second set top box according to an instruction of the first interaction instruction, so that the second set top box displays the interaction content. When displaying the interaction content, the second set top box sends prompt information to a user, for example, flickering an interface or playing a prompt tone.

The interaction result information receiving module 703 is configured to receive interaction result information that is sent by the second set top box according to the interaction content.

A user of the second set top box determines an interaction result according to the interaction content, for example, accepting playing or refusing to play a recommended program, and then the interaction result information is generated. By using a method similar to the method for sending the first interaction instruction by the user of the first set top box, the user of the second set top box sends a second interaction instruction to the second set top box, where the second interaction instruction is used to instruct the second set top box to send the interaction result information to the first set top box.

Afterwards, the second set top box sends the interaction result information to the first set top box, and the interaction result information receiving module 703 receives the interaction result information sent by the second set top box.

The interaction result displaying module 704 is configured to display the interaction result according to the interaction result information.

After the interaction result information receiving module 703 receives the interaction result information sent by the second set top box, the interaction result displaying module 704 displays the interaction result, so that the user of the first set top box learns a result of the current interaction. For example, if the user of the second set top box accepts playing or refuses to play the recommended program, a display manner similar to the manner in which the interaction content is displayed is adopted. Details are not repeatedly described herein.

Preferably, the first set top box may further conduct the foregoing social activity with a plurality of set top boxes in addition to the second set top box at the same time, that is, a social network activity among a plurality of users with equal social status is implemented. The second set top box described in this embodiment is merely an example and constitutes no specific limitation on the number of interaction objects in this scenario.

In this embodiment, a user of a first set top box sends interaction information to a second set top box by using an interaction information sending module 702, so that the second set top box displays interaction content to a user of the second set top box; the user of the second set top box chooses and determines interaction result information according to the interaction content and instructs the second set top box to feed back the interaction result information; and after an interaction result information receiving module 703 receives the interaction result information sent by the second set top box, an interaction result displaying module 704 displays an interaction result to the user of the first set top box, thereby implementing that remote set top box users conduct a social network activity with equal social status. The method in the present invention ensures equal social status between users in an interaction process, thereby improving set top box-based social interaction experience of the users and satisfying social needs of the users.

A seventh embodiment of the present invention provides a detailed description of another set top box. In addition, this apparatus embodiment is corresponding to the method embodiment in the third embodiment. Details of some related conventional technologies are not repeatedly described herein.

For a specific structure of the set top box in this embodiment, refer to FIG. 8. The set top box includes: an interaction information receiving module 801, an interaction content displaying module 802, and an interaction result information sending module 803.

The interaction information receiving module 801 is configured to receive interaction information sent by a first set top box.

In this embodiment, in an application scenario in which remote set top box users conduct a social network activity with equal social status, when a user of the first set top box hopes, in a process of watching a television program, to recommend a program that is currently being watched to a remote friend for enjoying, the user of the first set top box instructs the first set top box to send the interaction information to a second set top box.

The interaction information receiving module 801 receives the interaction information sent by the first set top box.

The interaction content displaying module 802 is configured to display interaction content according to the interaction information.

After the interaction information receiving module 801 receives the interaction information sent by the first set top box, the interaction content displaying module 802 displays the interaction content according to the interaction information.

The interaction information is a basis for the second set top box to display the interaction content. After receiving the interaction information sent by the first set top box, the second set top box performs a parsing operation and then displays, by using a television set, the interaction content obtained through parsing to a current user; and the current user may reply to the social activity of a current program recommendation according to the interaction content.

The interaction result information sending module 803 is configured to send interaction result information to the first set top box according to the interaction content.

After the user of the second set top box replies to the social activity of the current program recommendation according to the interaction content, the interaction result information sending module 803 sends the interaction result information to the first set top box according to the interaction content, that is, the interaction result information is determined by the user of the second set top box according to the interaction content.

Preferably, the second set top box may further conduct the foregoing social activity with a plurality of set top boxes in addition to the first set top box at the same time, that is, a social network activity among a plurality of users with equal social status is implemented. The first set top box described in this embodiment is merely an example and constitutes no specific limitation on the number of interaction objects in this scenario.

In this embodiment, an interaction information receiving module 801 receives interaction information sent by a first set top box, an interaction content displaying module 802 displays interaction content, and a user of a second set top box chooses and determines interaction result information according to the interaction content and instructs an interaction result information sending module 803 to feed back the interaction result information, thereby implementing that remote set top box users conduct a social network activity with equal social status. The method in the present invention ensures equal social status between users in an interaction process, thereby improving set top box-based social interaction experience of the users and satisfying social needs of the users.

An eighth embodiment of the present invention provides a supplementary description of the set top box in the seventh embodiment. In addition, this apparatus embodiment is corresponding to the method embodiment in the fourth embodiment. Details of some related conventional technologies are not repeatedly described herein. For a specific structure of the set top box in this embodiment, refer to FIG. 9. The set top box includes: an interaction information receiving module 901, an interaction content displaying module 902, a second interaction instruction receiving module 903, and an interaction result information sending module 904.

The interaction information receiving module 901 is configured to receive interaction information sent by a first set top box.

In this embodiment, in an application scenario in which remote set top box users conduct a social network activity with equal social status, when a user of the first set top box hopes, in a process of watching a television program, to recommend a program that is currently being watched to a remote friend for enjoying, the user of the first set top box sends a first interaction instruction to the first set top box.

The first interaction instruction is used to instruct the first set top box to send interaction information of a corresponding program to the second set top box. The interaction information receiving module 901 receives the interaction information sent by the first set top box.

The interaction content displaying module 902 is configured to display interaction content according to the interaction information.

The interaction information is a basis for the second set top box to display the interaction content. When displaying the interaction content, the interaction content displaying module 902 sends prompt information to a user, for example, flickering an interface or playing a prompt tone.

The interaction content displaying module 902 displays the interaction content according to the interaction information. Specifically, after the interaction information receiving module 901 receives the interaction information sent by the first set top box, a decoder performs a parsing operation, then the interaction content displaying module 902 displays, by using a television set, the interaction content obtained through parsing to a current user, and the current user may reply to the social activity of a current program recommendation according to the interaction content.

For an example of the interaction content, refer to related records in the second embodiment of the present invention.

The second interaction instruction receiving module 903 is configured to receive a second interaction instruction, where the second interaction instruction is used to instruct the second set top box to send interaction result information to the first set top box according to the interaction content.

The second set top box receives the second interaction instruction, where the second interaction instruction is used to instruct the second set top box to send the interaction result information to the first set top box according to the interaction content, that is, the interaction result information is determined by a user of the second set top box according to the interaction content.

The user of the second set top box determines an interaction result according to the interaction content, for example, accepting playing or refusing to play a recommended program, and then the interaction result information is generated. Referring to a record of the first interaction instruction in the second embodiment of the present invention, the user of the second set top box sends the second interaction instruction to the second set top box by using a method similar to the method for sending the first interaction instruction by the user of the first set top box.

The interaction result information sending module 904 is configured to send the interaction result information to the first set top box according to the interaction content.

The interaction result information sending module 904 sends the interaction result information to the first set top box, and the first set top box receives the interaction result information sent by the second set top box. After receiving the interaction result information sent by the second set top box, the first set top box displays the interaction result according to the interaction result information. For example, if the user of the second set top box accepts playing or refuses to play the recommended program, a display manner similar to the manner in which the interaction content is displayed is adopted. Details are not repeatedly described herein.

Preferably, the second set top box may further conduct the foregoing social activity with a plurality of set top boxes in addition to the first set top box at the same time, that is, a social network activity among a plurality of users with equal social status is implemented. The first set top box described in this embodiment is merely an example and constitutes no specific limitation on the number of interaction objects in this scenario.

In this embodiment, a user of a first set top box sends interaction information to a second set top box by using the first set top box, so that an interaction content displaying module 902 displays interaction content to a user of the second set top box; the user of the second set top box chooses and determines interaction result information according to the interaction content and instructs an interaction result information sending module 904 to feed back the interaction result information; and after receiving the interaction result information sent by the second set top box, the first set top box displays the interaction result to the user of the first user, thereby implementing that remote set top box users conduct a social network activity with equal social status. The method in the present invention ensures equal social status between users in an interaction process, thereby improving set top box-based social interaction experience of the users and satisfying social needs of the users.

A ninth embodiment of the present invention provides a detailed description of a set top box interaction system. In addition, details of some related conventional technologies in this system embodiment are not repeatedly described herein. A specific structure of the set top box interaction system in this embodiment includes:
a first set top box and a second set top box, where these two are connected to each other in a communicationable manner. The first set top box is the set top box described in the fifth embodiment of the present invention, and the second set top box is the set top box described in the seventh embodiment of the present invention. According to the foregoing records, the first set top box includes an interaction information sending module and an interaction result information receiving module; and the second set top box includes an interaction information receiving module, an interaction content displaying module, and an interaction result information sending module.

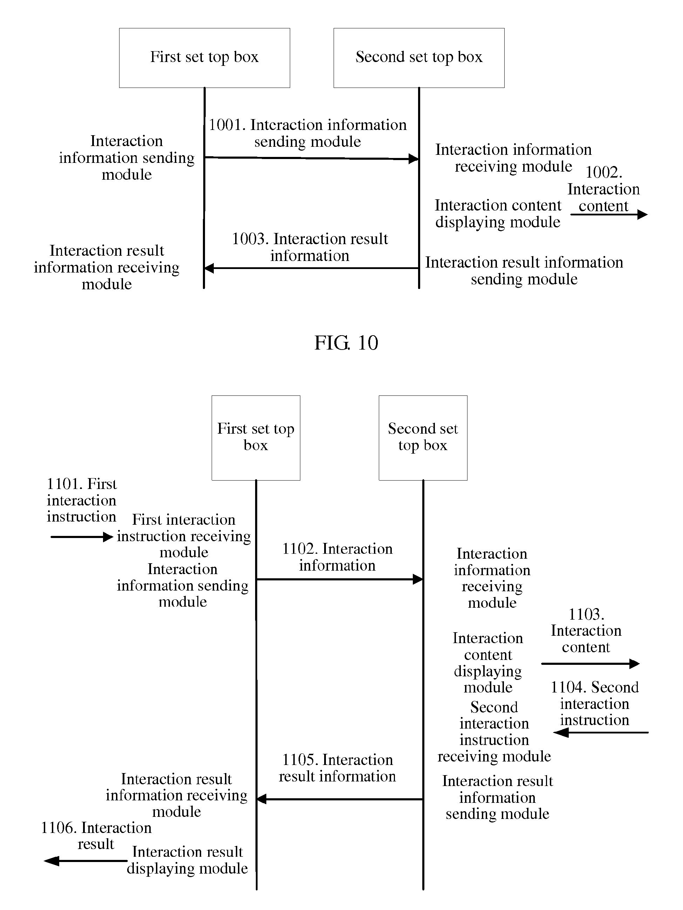

In this embodiment, in an application scenario in which remote set top box users conduct a social network activity with equal social status, when in a process of watching a television program, it is hoped that a program that is currently being watched is recommended to a remote friend for enjoying, refer to FIG. 10. The following describes a working process in the system.
1001. An interaction information sending module of a first set top box sends interaction information to an interaction information receiving module of a second set top box.

A user of the first set top box instructs the interaction information sending module to send the interaction information to the interaction information receiving module of the second set top box, so that the second set top box displays interaction content.
1002. An interaction content displaying module of the second set top box displays interaction content.

The interaction content displaying module of the second set top box displays the interaction content according to the interaction information.
1003. An interaction result information sending module of the second set top box sends interaction result information to an interaction result information receiving module of the first set top box.

After a user of the second set top box replies to the social activity of a program recommendation according to the interaction content, the interaction result information sending module of the second set top box sends the interaction result information to the interaction result information receiving module of the first set top box.

In this embodiment, a social network activity among remote set top box users with equal social status is implemented in this system. The method in the present invention ensures equal social status between users in an interaction process, thereby improving set top box-based social interaction experience of the users and satisfying social needs of the users.

A tenth embodiment of the present invention provides a supplementary description of the set top box interaction system in the ninth embodiment. In addition, details of some related conventional technologies in this system embodiment are not repeatedly described herein. A specific structure of the set top box interaction system in this embodiment includes
a first set top box and a second set top box, where these two are connected to each other in a communicationable manner. The first set top box is the set top box described in the sixth embodiment of the present invention, and the second set top box is the set top box described in the eighth embodiment of the present invention. According to the foregoing records, the first set top box includes a first interaction instruction receiving module, an interaction information sending module, an interaction result information receiving module, and an interaction result displaying module; and the second set top box includes an interaction information receiving module, an interaction content displaying module, a second interaction instruction receiving module, and an interaction result information sending module.

In this embodiment, in an application scenario in which remote set top box users conduct a social network activity with equal social status, when in a process of watching a television program, it is hoped that a program that is currently being watched is recommended to a remote friend for enjoying, refer to FIG. 11. The following describes a working process in the system.
1101. A first interaction instruction receiving module of a first set top box receives a first interaction instruction.

After a user of the first set top box sends the first interaction instruction to the first set top box, the first interaction instruction receiving module of the first set top box receives the first interaction instruction.
1102. An interaction information sending module of the first set top box sends interaction information to an interaction information receiving module of a second set top box.

The interaction information sending module of the first set top box sends the interaction information to the interaction information receiving module of the second set top box, so that the second set top box displays interaction content.
1103. An interaction content displaying module of the second set top box displays interaction content.

The interaction content displaying module of the second set top box displays the interaction content according to the interaction information.
1104. A second interaction instruction receiving module of the second set top box receives a second interaction instruction.

After a user of the second set top box replies to the social activity of a program recommendation according to the interaction content, the user of the second set top box sends the second interaction instruction to the second set top box, and the second interaction instruction receiving module of the second set top box receives the second interaction instruction.
1105. An interaction result information sending module of the second set top box sends interaction result information to an interaction result information receiving module of the first set top box.

After the second interaction instruction receiving module of the second set top box receives the second interaction instruction, the interaction result information sending module of the second set top box sends the interaction result information to the interaction result information receiving module of the first set top box.
1106. An interaction result displaying module of the first set top box displays an interaction result according to the interaction result information.

After the interaction result information receiving module of the first set top box receives the interaction result information sent by the interaction result information sending module of the second set top box, the interaction result displaying module of the first set top box displays the interaction result according to the interaction result information.

In this embodiment, a social network activity among remote set top box users with equal social status is implemented in the system. The method in the present invention ensures equal social status between users in an interaction process, thereby improving set top box-based social interaction experience of the users and satisfying social needs of the users.

A person of ordinary skill in the art may understand that all or a part of the steps of the methods in the embodiments may be implemented by a program instructing relevant hardware. The program may be stored in a computer readable storage medium. The storage medium may include: a read-only memory, a magnetic disk, or an optical disc.

The set top box interaction method and a related set top box and system provided in the present invention are introduced in detail in the foregoing. A person of ordinary skill in the art may make a change to a specific implementation manner and an application scope according to the idea of the embodiments of the present invention. In conclusion, content of this specification should not be understood as a limitation on the present invention.

## Claims

1. A set top box interaction method, comprising:
sending, by a first set top box, interaction information to a second set top box, so that the second set top box displays interaction content; and
receiving, by the first set top box, interaction result information that is sent by the second set top box according to the interaction content.

2. The method according to claim 1, wherein:
the interaction content is displayed in an interaction dialog box and/or a Picture in Picture preview box.

3. The method according to claim 1 or 2, before the sending, by a first set top box, interaction information of a program, further comprising:
receiving, by the first set top box, a first interaction instruction, wherein the first interaction instruction is used to instruct the first set top box to send interaction information of a corresponding program to the second set top box.

4. The method according to claim 1 or 2, after the receiving, by the first set top box, interaction result information sent by the second set top box, further comprising:
displaying, by the first set top box, an interaction result according to the interaction result information.

5. A set top box interaction method, comprising:
receiving, by a second set top box, interaction information sent by a first set top box;
displaying, by the second set top box, interaction content according to the interaction information; and
sending, by the second set top box, interaction result information to the first set top box according to the interaction content.

6. The method according to claim 5, after the displaying, by the second set top box, interaction content according to the interaction information, further comprising:
receiving, by the second set top box, a second interaction instruction, wherein the second interaction instruction is used to instruct the second set top box to send the interaction result information to the first set top box according to the interaction content.

7. A set top box, comprising:
an interaction information sending module, configured to send interaction information to a second set top box, so that the second set top box displays interaction content; and
an interaction result information receiving module, configured to receive interaction result information that is sent by the second set top box according to the interaction content.

8. The set top box according to claim 7, wherein the set top box further comprises:
a first interaction instruction receiving module, configured to receive a first interaction instruction, wherein the first interaction instruction is used to instruct the first set top box to send interaction information of a corresponding program to the second set top box.

9. The set top box according to claim 7 or 8, wherein the set top box further comprises:
an interaction result displaying module, configured to display an interaction result according to the interaction result information.

10. A set top box, comprising:
an interaction information receiving module, configured to receive interaction information sent by a first set top box;
an interaction content displaying module, configured to display interaction content according to the interaction information; and
an interaction result information sending module, configured to send interaction result information to the first set top box according to the interaction content.

11. The set top box according to claim 10, wherein the set top box further comprises:
a second interaction instruction receiving module, configured to receive a second interaction instruction, wherein the second interaction instruction is used to instruct the second set top box to send the interaction result information to the first set top box according to the interaction content.

12. A set top box interaction system, comprising:
the set top box according to any one of claims 7 to 9 and the set top box according to any one of claim 10 or 11, wherein these two are connected to each other in a communicationable manner.
